# EUROPEAN PATENT APPLICATION

(11) **EP 3 960 393 A1**
(43) Date of publication of application: **02.03.2022**
(21) Application number: 20192462.8
(22) Date of filing: 24.08.2020
(51) Int. Cl.: B25J 9/16

(54) **METHOD AND SYSTEM FOR PROGRAMMING A ROBOT**

(71) Applicant: ABB Schweiz AG, 5400 Baden (CH)
(72) Inventor: VERSCHUEREN, Robin, 8003 Zürich (CH); LOCHER, Thomas, 8050 Zürich (CH); BIRKE, Robert, 8802 Kilchberg (CH)
(74) Representative: Zimmermann & Partner Patentanwälte mbB

(57) **Abstract**

A method and system are provided for programming robots by users without expertise in specialized robot programming languages. In the method, a high-level description is provided by the user to a translator. The translator translates the description into a transformation. A transformer applies the transformation to an existing robot trajectory in order to provide an updated robot trajectory. The updated robot trajectory is then used to operate the robot.

## Description

### BACKGROUND

The present inventions relate generally to robots, and more particularly, to programming robots.

When programming a robot, a sequence of positions (e.g., coordinates and rotations) must be defined for all joints so that the sequence together implements the desired robot functionality. Programming a robot is a laborious task, even when using state-of-the-art robot development tools (e.g., RobotStudio). The large initial time investment is acceptable when the robot is meant to execute the given task repeatedly over a long period of time. However, conventional robot programming becomes less economical when the work environment or the task frequently changes since any change requires a re-implementation of the task regardless of the nature or magnitude of the change.

### SUMMARY

A method and system are described for programming robots. In the method and system, the user provides a high-level description of a modification to be made to an existing robot trajectory. A translator translates the description into a transformation that may be applied to the existing robot trajectory. A transformer then transforms the existing robot trajectory using the transformation to provide an updated robot trajectory. The robot may then be operated to perform the updated robot trajectory without requiring reprogramming by an expert engineer using specialized robot programming software code. Thus, the method and system allows non-expert users without experience with specialized robot programming languages to modify a robot program. The invention may also include any other aspect described below in the written description or in the attached drawings and any combinations thereof.

The system may be configured for programming the robot by the user according to any method described herein. The system may comprise a translator configured for receiving and for translating the description; a transformer configured for receiving the existing robot trajectory and configured for receiving the transformation, the transformer being configured for transforming the existing robot trajectory (22) into the updated robot trajectory; the controller configured for receiving the updated robot trajectory; and the robot (30) configured for performing the updated robot trajectory. Also, a use of the system for programming the robot using any method described herein is provided.

### BRIEF DESCRIPTION OF SEVERAL VIEWS OF THE DRAWINGS

The invention may be more fully understood by reading the following description in conjunction with the drawings, in which:

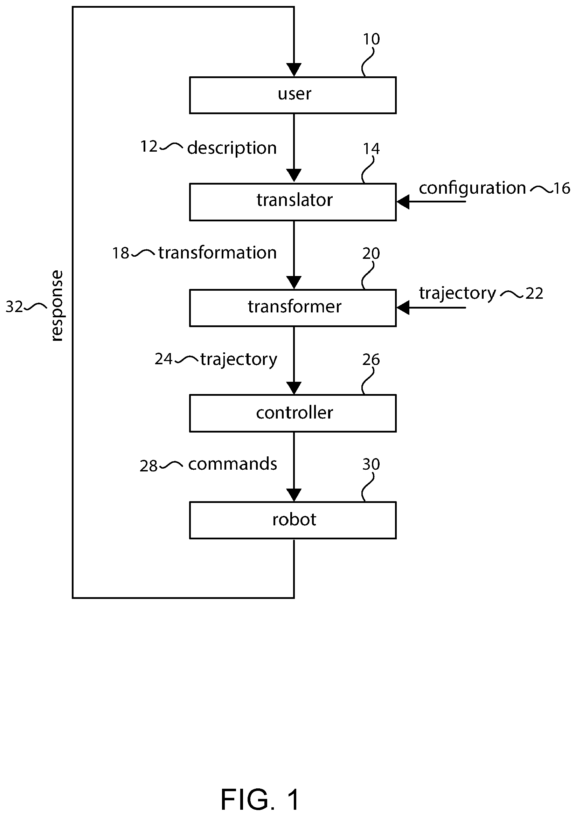

Figure 1 is a flow chart of a method and system of programming a robot by a user.

### DETAILED DESCRIPTION

Robotic systems perform robot tasks within the workspace of the robot. Inside the workspace, a robot task consists of a trajectory, which is a time series of coordinates in space. For instance, a trajectory can be a time series of joint angles or tooltip coordinates. The robotic system uses a controller to guide the robot along the coordinates of the robot trajectory exactly or approximately. As a result, the robot may perform various useful tasks. However, since robotic systems manipulate real objects, robot tasks rarely remain the same throughout the entire lifespan of a robotic system due to various changes that may be required for the robot task. In case of a change in the work environment, task or robot configuration, users of robotic systems need to modify existing robot trajectories in order to alter the behavior of the robot. This requires performing geometric calculations on the existing robot trajectories, which often are not readily available to a user. Alternatively, developing entirely new trajectories for task variations is time-consuming and cumbersome. In order to overcome this problem, an intuitive system for manipulating existing robot tasks would be preferable.

The method and system herein may be useful in facilitating the implementation of robot tasks and the modification of tasks due to changes in the task or the environment in which the task is carried out. Abstract commands may be used to manipulate trajectories in such a way that a new or updated task can be generated out of a given set of basic movements or existing tasks with minimal effort. As a result, a level of adaptability may be reached that not only simplifies robot programming but also obviates the need for re-implementing robot tasks when transitioning to a new environment. This simplification makes robot programming significantly faster and less expensive.

The improved method and system allows the user of a robotic system to modify robot trajectories using intuitive, high-level commands. Oftentimes, the user of a robot is a non-expert with minimal or no programming skills using software commands of special-purpose robot programming languages. The improved method and system preferably includes at least two parts: a translator and a transformer. The translator receives a high-level command or a series of high-level commands from the user and translates these into a set of transformations. The transformer applies these transformations to an existing robot task. Depending on the configuration of the robot, the trajectory is transformed or the user is informed that the requested trajectory transformation is infeasible.

The method and system addresses the problem of allowing the user to manipulate robot tasks which is otherwise limited in conventional robotic systems and allowing the user to avoid developing whole new robot tasks that are mere variations of existing tasks. Further, the system allows the use of high-level commands which results in an intuitive interface that is easy to use.

It is also possible to provide a method and system for the cases where a completely new robot task is required. For example, when a larger change occurs (e.g., a change in the robot cell), or a robot is first taken into production, entirely new trajectories may be needed. In this case, the method and system may supply pre-established motion primitives that encode frequently used robot motions. The same trajectory manipulation method as described above may then be used to simplify robot programming for new robot tasks. Using the same manipulation method for modifying existing robot tasks and creating new robot tasks simplifies the work of the robot task developer and thus makes the use of the whole robotic system faster and less expensive.

Another advantage of the method and system is that conventional components used in a typical robotic system, such as the controller, may be reused. Since the method and system works at the trajectory abstraction level, the robot controller simply executes the resulting trajectory using conventional robot programming code.

An overview of how the method and system works is shown in Figure 1. First, the user 10 of the robotic system provides a high-level description 12 of the trajectory manipulation that needs to be performed. The description 12 might pertain to environment properties, such as properties of the object being manipulated, or properties of the workspace, such as obstacles, or properties of the immediate surroundings of the robotic system, such as brightness, sounds, etc. Such properties may be obtained by a variety of sensing devices, such as cameras, microphones and LIDAR devices. In addition, the description 12 may relate to properties of the trajectory itself, such as velocity, acceleration, smoothness, approximation methods or randomization. The description 12 may also relate to the robot 30 itself, such as physical components of the robot 30 or the robot configuration. A description 12 may also be a series of high-level descriptions that form a more complex abstract description of the robot task manipulation. A variety of inputs may be provided by the user 10 as the description 12, including for example, a textual input such as a colloquial sentence or phrase, or an input on a touchpad indicating a direction, object, icon or the like.

The description 12 is then fed into the translator 14. The translator 14 is responsible for interpreting the high-level description 12 received from the user 10 and outputting a series of trajectory transformations 18 corresponding to the high-level description 12. The transformations 18 are mathematical adjustments interpreted from the high-level description 12 which may be used to modify an existing robot trajectory 22, such as an adjustment to the size of an object, an adjustment to the rotational orientation of an object, or an adjustment to the location of an object. In order to provide the transformations 18, the translator 14 may pull in extra information 16, such as the robot configuration, perception data, historical data or data from other sources. The collection of this extra information 16 is indicated in Figure 1 by the configuration input 16 to the translator 14. In some situations, the translator 14 might not have all the information it needs to output a trajectory transformation 18. The translator 14 then prompts the user 10 to provide a more specific description 12 or provide specific information 12. In other situations, the translator 14 may determine that the described modification is infeasible. The translator 14 may then notify the user 10 that the requested modification is not feasible and may prompt the user 10 for a different modification description 12.

The transformer 20 then receives a series of transformations 18 from the translator 14. The transformer 20 also receives the existing robotic trajectories 22 and applies the transformations 18 to the trajectories 22. Thus, the order of the trajectories is used in the method and system in that the transformer 20 starts from the coordinates of an existing robot task 22 and modifies the existing robot task 22 with the transformation 18. However, in some situations, no existing robotic trajectories 22 (i.e., actual operational robot tasks) have been developed for the particular robot task, for example, when specifying a completely new task or when changing the underlying robotic system. In this situation, the method and system supplies the transformer 20 with robotic trajectories 22 corresponding to often occurring robot motions called motion primitives 22. The motion primitives 22 may be pre-established and may be included with the high-level description 12 supplied by the user 10. A plurality of motion primitives 22 may also be provided to the user 10 in a library to allow the user 10 to combine together selected motion primitives 22 to form a complete robot trajectory 22.

The resulting transformed trajectory 24 is then programmed onto the controller 26. The controller 26 and the robot 30 are preferably conventional components that require specialized robot programming software code in order to perform a trajectory. Thus, it is possible for the improved method and system to use existing controllers 26 and robots 30 without any alterations thereof. That is, the trajectories 24 that are fed to the controller 26 are transformed by the transformer 20 into conventional specialized programming software code used by conventional controllers 26 and robots 30. It may be desirable for the translator 14 and the transformer 20 to be separate software components that are independent of the controller 26 and the robot 30 in order to simplify use of the system with conventional controllers 26 and robots 30. It is understood that the existing robot trajectory 22 and the updated robot trajectory 24 both include a time series of coordinates for the robot to follow. The controller 26 then drives the robot with a series of commands 28 using the transformed trajectories 24. The robot 30 then performs the trajectory 24, which is labeled as the response 32 in Figure 1. The user 10 may then observe the robot response 32, directly or indirectly, and accepts the resulting response 32 if it is deemed to be satisfactory or may decide to alter the high-level description 12 if a different trajectory response is desired.

As an illustrative example, the robotic system may be one that folds cardboard boxes. In such a system, the trajectories 22 for the manipulation of a standard size box may already exist and may be aligned with the workspace in front of the robot 30. The robot 30 may also be equipped with a perception subsystem with a camera. However, it is possible that a slightly wider cardboard box may arrive at the robot 30 which is turned 45° with respect to the expected orientation. A possible high-level command 12 supplied by the user 10 may be, for example, "this box is 20% wider and is rotated". The translator 14 receives the description 12 and requests an estimated rotation 16 from the perception subsystem. This is an example of extra information 16 pulled in by the translator 14 (the configuration input 16 in Figure 1). The translator 14 then outputs a series of transformations 18, e.g., "scale horizontal component by 120% and rotate entire trajectory by 45 degrees around the vertical axis". This collection of transformations 18 then feeds into the transformer 20. First, the transformer 20 multiplies the horizontal component of the coordinates of the robot trajectory 22 for the standard size box by 120%. Then, the transformer 20 rotates the scaled trajectory by 45° around the vertical axis. The resulting trajectory 24 is a new robot task that is suitable for handling the modified box. The robot 20 is now ready to carry out the task and fold the modified box. If the user 10 is satisfied with the way the robot 30 handles the modified box, the robot 30 can move on to the next task. If not, the user 10 may choose to alter the description 12, e.g., "this box is 20% wider and is rotated counter-clockwise".

While preferred embodiments of the inventions have been described, it should be understood that the inventions are not so limited, and modifications may be made without departing from the inventions herein. While each embodiment described herein may refer only to certain features and may not specifically refer to every feature described with respect to other embodiments, it should be recognized that the features described herein are interchangeable unless described otherwise, even where no reference is made to a specific feature. It should also be understood that the advantages described above are not necessarily the only advantages of the inventions, and it is not necessarily expected that all of the described advantages will be achieved with every embodiment of the inventions. The scope of the inventions is defined by the appended claims, and all devices and methods that come within the meaning of the claims, either literally or by equivalence, are intended to be embraced therein.

## Claims

1. A method of programming a robot (30) by a user (10), comprising:
receiving a description (12) from the user (10) of a change to be made to an existing robot trajectory (22);
translating (14) the description (12) into a transformation (18);
receiving the existing robot trajectory (22) comprising at least a first time series of coordinates for the robot (30) to follow;
transforming (20) the existing robot trajectory (22) into an updated robot trajectory (24) by applying the transformation (18) to the existing robot trajectory (22), the updated robot trajectory (24) comprising at least a second time series of coordinates for the robot (30) to follow;
programming a controller (26) of the robot (30) with the updated robot trajectory (24); and
operating (28) the robot (30) with the controller (26) to perform (32) the updated robot trajectory (24).

2. The method according to claim 1, wherein the description (12) comprises a textual input.

3. The method according to any previous claim, wherein the description (12) comprises a touchpad input.

4. The method according to any previous claim, wherein the transformation (18) is a mathematical adjustment.

5. The method according to any previous claim, wherein the transformation (18) is an object size adjustment, an object rotation adjustment or an object location adjustment.

6. The method according to any previous claim, further comprising receiving a configuration input (16), wherein the transformation (18) is translated (14) from the description (12) and the configuration input (16).

7. The method according to any previous claim, wherein the existing robot trajectory (22) comprises an operational robot task.

8. The method according to claims 1-6, wherein the existing robot trajectory (22) comprises a pre-established motion primitive.

9. The method according to claims 1-6 or 8, wherein the existing robot trajectory (22) comprises a plurality of pre-established motion primitives combined together and selected from a library of pre-established motion primitives.

10. A system for programming the robot (30) by the user (10) according to the method of any previous claim, comprising:
a translator (14) receiving the description (12) from the user (10) and translating the description (12) into the transformation (18);
a transformer (20) receiving the existing robot trajectory (22) and receiving the transformation (18) from the translator (14), the transformer (20) transforming the existing robot trajectory (22) into the updated robot trajectory (24);
the controller (26) receiving the updated robot trajectory (24) from the transformer (20); and
the robot (30) performing the updated robot trajectory (24) in response to the controller (26).

11. The system according to claim 10, wherein the translator (14) and the transformer (20) are software components independent of the controller (26) and the robot (30).
